# EUROPÄISCHE PATENTSCHRIFT

(11) **EP 2 699 374 B1**
(45) Veröffentlichungstag und Bekanntmachung des Hinweises auf die Patenterteilung: **12.08.2015**
(21) Anmeldenummer: 12724850.8
(22) Anmeldetag: 18.04.2012
(51) Int. Cl.: B23D 55/08

(54) **DÄMPFUNGSROLLE**
DAMPING ROLLER
GALET AMORTISSEUR

(30) Priorität: 20.04.2011 AT 5672011; 18.08.2011 AT 11922011; 23.09.2011 AT 13802011
(43) Veröffentlichungstag der Anmeldung: 26.02.2014
(73) Patentinhaber: Fill Gesellschaft m.b.H., 4942 Gurten (AT)
(72) Erfinder: BOINDECKER, Alois, A-4942 Gurten (AT); STRASSER, Franz, A-4925 Pramet (AT)
(74) Vertreter: Burger, Hannes
(86) Internationale Anmeldenummer: PCT/AT2012/050052
(87) Internationale Veröffentlichungsnummer: WO 2012/142644

(56) Entgegenhaltungen:
- WO-A1-91/12937
- DE-A1- 10 043 012
- JP-A- 2008 229 742
- US-A- 334 175
- US-A- 365 441
- US-A- 537 576
- US-A- 2 602 987
- US-A- 2 783 793
- US-A- 3 680 417

## Beschreibung

Die Erfindung betrifft eine Bandsägevorrichtung gemäß den Oberbegriften der unabhängigen Ansprüche 1 und 10. Eine solche Bandsägevorrichtung ist der WO 91/12 937 A1 zu entnehmen.

Beim Sägevorgang, insbesondere am Beginn des Anschnittvorganges in das zu sägende Werkstück kommt es häufig zu einer unruhigen und schwingenden Lage des Bandsägeblattes. Dies führt zu Formabweichungen sowie einem größeren Wert der Rautiefe im Anschnittbereich. Aus diesem Grund sind zumeist Führungen vorgesehen, um das Sägeband definiert laufen zu lassen. Durch ein Spiel in den Führungen wird jedoch eine gewisse Bewegungsfreiheit des Bandsägeblattes ermöglicht. Diese bekannten Führungen, welche auch als Metallrollen ausgebildet sein können, dämpfen jedoch das Schwingungsverhalten des Sägebandes während dem Anschnitt nicht. Sind die Führungen als Metallrollen ausgebildet, kann es auf grund mangelnder Haftreibung zwischen Rolle und Bandsägeband zu einem Abgleiten des Bandsägebandes auf diesen Rollen kommen. Was zu einer einseitigen und unkontrollierten Abflachung der Rollen führen kann. Um die Schwingungen selbst zu dämpfen, wurden bislang sogenannte Anschnittsrampen eingesetzt. Unter einer Anscbnittsrampe wird hierbei die Steigerung der Schnittgeschwindigkeit und des Vorschubes des Bandsägeblattes von einem geringeren Wert hin zu einem dazu höheren Wert verstanden. Somit ergibt sich im Anschnittbereich eine verminderte Vorschub- und Schnittgeschwindigkeit des Bandsägeblattes gegenüber einer im Block befindlichen Position des Sägeblattes. Dies führt zu einer erhöhten Produktionszeit, da nicht von Beginn an mit maximaler Vorschub- und Schnittgeschwindigkeit gearbeitet werden kann. Darüber hinaus kann es dabei auch zu einer hohen Gerauschentwicklung während des Sägevorganges kommen.

Die DE 10 2006 037 705 A beschreibt eine Sägevorrichtung mit einem Sägewerkzeug mit einem Lager, in dem das Sägewerkzeug gelagert ist. Weiters sind Antriebsmittel zur Erzeugung einer Bewegung des Sägewerkzeuges relativ zu dem Lager vorgesehen. Dabei ist das das Sägewerkzeug führende Lager als Fluidlager ausgebildet. Zur Erzeugung des Flüidlagers wird ein Flüssigkeitspolster zwischen dem Lager und dem Sägewerkzeug aufgebaut. Nachteilig dabei ist vor allem der komplizierte Aufbau, und dass nicht in allen Anwendungsfällen aufgrund des zugeführten Fluides ein Einsatz möglich ist.

Eine Bandsägevorrichtung der eingangs genannten Art ist auch aus der WO 91/12937 Albekannt geworden. Eine weitere Vorrichtung ist beispielsweise auch aus der JP 2008/229742 bekannt geworden. Die zuletzt genannten Vorrichtung weist eine Dämpfungsrolle auf, bei der an ihrer stirnseitigen Umfangsfläche Magnete angeordnet sind. Die Magnete wirken hierbei auf eine Flanke der Bandsäge und ziehen diese in Richtung der Stirnseite ("Lauffläche") der Dämpfungsrolle. Nachteilig bei der bekannten Ausführungsform ist vor allem, dass mittels der Dämpfungsrolle keine Vorschubkraft in Richtung der Schneidkante des Bandsägeblatt auf den Bandrücken ausgeübt werden kann und keine zuverlässige seitliche Führung des Bandsägeblattes gegeben ist.

Der vorliegenden Erfindung liegt die Aufgabe zugrunde, eine Bandsägevorrichtung zu schaf fen, mit welcher bereits beim Beginn des Anschnittvorganges eine verbesserte Oberflächenqualität bei erhöhter Formgenauigkeit im Schnittbereich und eine erhöhte Produktivität erzielbar ist.

Diese Aufgabe wird mit einer Bandsägevorrichtung der eingangs genannten Art erfindungsgemäß dadurch gelöst, dass die Dämpfungsrolle zumindestein ein Einlageelement aus einem elastomeren, insbesondere gummielastischen, Material aufweist, welches gegen eine Flanke des Bandsägeblattes gepresst-ist. Aufgrund der reibungsschlüssigen Verbindung zwischen dem Bandsägeblatt und der Dämpfungsrolle kommt es zu einer Mitnahme der Dämpfungsrolle in Bewegungsrichtung des Bandsägebandes. Die Haftgrenze zwischen Bandsägeblatt und Dämpfungsrolle wird hierbei nicht überschritten. Somit wird die Rolle in Drehung versetzt, sobald sich das Bandsägeband bewegt, wodurch ein unkontrolliertes Abrutschen des Bandrückens auf einer Spurführung der Rolle verhindert werden kann. Ein Schlupf zwischen Dämpfungsrolle und Bandsägeblatt kann aufgrund der Erfindung gänzlich unterbunden bzw. auf ein sehr geringes Maß (kleiner als 10%) reduziert werden.

Um eine möglichst spielfreie Anordnung der Bandsäge in der Dämpfungsrolle zu erzielen, kann das zumindest eine Einlageelement gegen eine von dem elastomeren Material hervorgerufene Rückstellkraft gegen die Flanke des Bandsägeblattes gepresst sein.

Eine einfach zu realisierende und einen sehr guten Reibschluss gewährleistende bevorzugte Variante der Erfindung sieht vor, dass das zumindest eine Einlageelement als O-Ring ausgebildet ist. Gemäß einer vorteilhaften Weiterbildung der Erfindung kann es vorgesehen sein, dass die Dämpfungsrolle zumindest zwei Einlageelemente aufweist, welche an einander gegenüberliegenden Flanken des Bandsägeblattes anliegen, und ein normal Abstand zwischen den Einlagelementen kleiner ist als ein Normalabstand zwischen den Flanken des Bandsägeblattes, wobei das Bandsägeblatt spielfrei zwischen und von den Einlageelementen gehalten ist. Diese Variante der Erfindung zeichnet sich durch einen Aufbau aus, der eine einfache und zuverlässige Anordnung des Bandrücken des Bandsägeblattes in der Dämpfungsrolle ermöglicht.

Eine weitere vorteilhafte Variante der Erfindung, welche eine Anpassung der Reibungskraft an sich ändernde Rahmenbedingungen ermöglicht, sieht vor, dass das zumindest eine Einlageelement als Membran ausgebildet ist, welche mittels eines Fluids, insbesondere Luft oder einer Flüssigkeit, beaufschlagbar und gegen die Flanke des Bandsägeblattes, pressbar ist

Gemäß einer vorteilhaften Weiterbildung der Erfindung kann es vorgesehen sein, dass die zumindest eine Dämpfungsrolle um eine normal zu einer Schnittebene verlaufende Achse drehbar angeordnet ist und ein Sicherheitsschalter zum Abschalten der Bandsägemaschine vorgesehen ist, der durch ein Verschwenken der Dämpfungsrolle um eine vorgebbare Auslenkung betätigt ist. Auf diese Weise lässt sich ein unkontrolliertes Verhalten des Bandsägeblattes und eine daraus resultierende Beschädigung der Bandschneidevorrichtung verhindern, da es bei einer vordefinierten Auslenkung des Bandsägeblattes aus einer Solllage zu einer automatischen Abschaltung der Bandsägevorrichtung kommt.

Darüber hinaus kann die Dämpfungsrolle auf zumindest einem mit einer Federkraft belasteten Arm drehbar gelagert sein, wobei der Arm um die normal zu der Schnittebene verlaufende Achse drehbar angeordnet sein kann.

Gemäß einer weiteren vorteilhaften Variante der Erfindung kann es auch vorgesehen sein, anstelle der Feder einen mit dem Arm verbundenen Kraftmesssensor, beispielsweise eine Kraftmessdose oder Wägezelle, einzusetzen, um einen Verschleiß der Schneide des Bandsägeblattes zu detektierten. Diese Ausführungsform hat den Vorteil, dass das Band stets annähernd in derselben Position gehalten wird. Beim Zurückdrücken des Arms auf eine Feder können beispielsweise ca. 2-4 mm notwendig sein, während bei Verwendung einer Kraftmessdose ein Weg von wesentlich weniger als 0.1mm zurückgelegt wird. Dadurch ist das Werkzeug immer in derselben idealen Position und der Zahnvorschub des Bandsägeblattes immer konstant.

Gemäß einer vorteilhaften Variante der Erfindung kann die zumindest eine Dämpfungsrolle an dem Grundrahmen angeordnet sein.

Alternativ zu einer rein passiven Mitnahme der Dämpfungsrolle durch das Bandsägeblatt kann die zumindest eine Dämpfungsrolle gemäß einer weiteren bevorzugten Ausführungsform der Erfindung auch angetrieben sein.

Die Aufgabe der vorliegenden Erfindung wird mit einer Bandsägevorrichtung der eingangs genannten Art erfindungsgemäß auch dadurch gelöst, dass die Dämpfungsrolle zumindest einen Magnet aufweist, um das Bandsägeblatt im Bereich der Dämpfungsrolle gegen eine Flanke der Dämpfungsrolle zu ziehen bzw. zu pressen, wobei der Magnet an einer inneren Flanke der Dämpfungsrolle angeordnet ist. Mit dieser Alternative der Erfindung lässt sich auf einfache Weise eine sehr gute Dämpfung des Bandsägeblattes erzielen.

Die Erfindung samt weiteren Vorteilen wird im Folgenden anhand einiger nicht einschränkender Ausführungsbeispiele, welche in den Figuren dargestellt sind, näher erläutert.

Es zeigen jeweils in stark schematisch vereinfachter Darstellung:
- Fig. 1: eine perspektivische Darstellung einer erfindungsgemäßen Bandsägevorrichtung;
- Fig. 2: einen Schnitt durch einen Abschnitt eines Grundrahmens und einer Dämpfungsrolle der Bandsägevorrichtung aus Fig. 1;
- Fig. 3: eine seitliche Ansicht einer weitere Ausführungsform einer erfindungsgemäßen Dämpfungsrollen;
- Fig. 4: eine seitliche Ansicht einer weiteren Variante einer erfindungsgemäßen Dämpfungsrolle und
- Fig. 5: eine seitliche Ansicht einer Hälfte einer erfindungsgemäßen Dämpfungsrolle, bei welcher Magnete eingesetzt sind.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

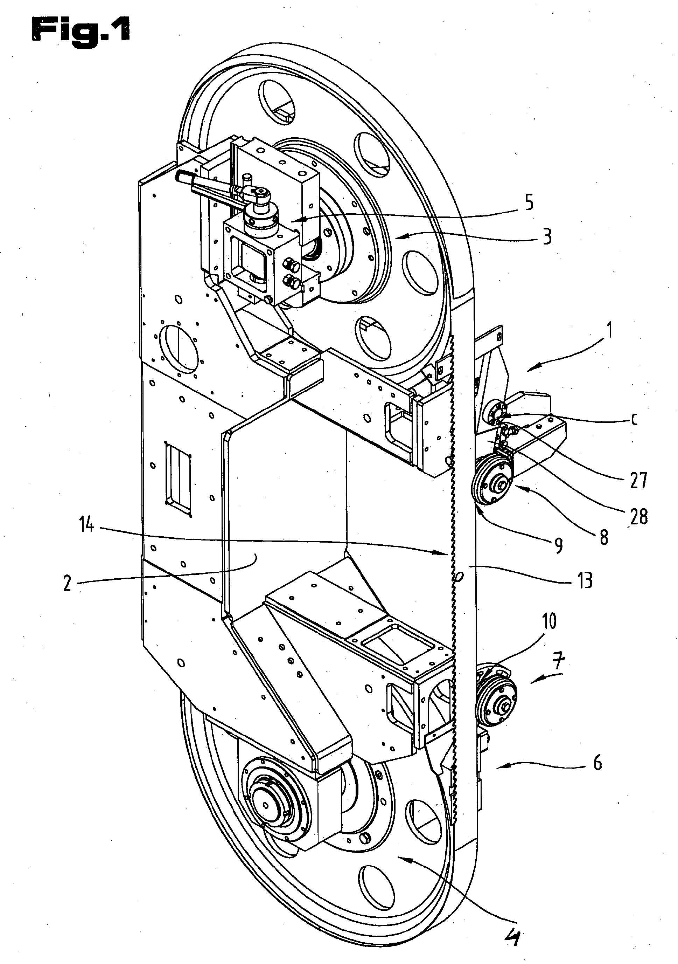

Gemäß Fig. 1 weist eine erfindungsgemäße Bandsägevorrichtung 1 einen Grundrahmen 2 und zwei voneinander distanziert angeordnete Umlenkräder 3, 4 auf. Weiters ist ein Antriebsmittel 5 vorgesehen, welches mit einem der Umlenkräder 3, 4 in einer Antriebsverbindung steht. Um die Umlenkräder 3, 4 ist ein endlos umlaufendes Bandsägeblatt 6 vorgesehen. Im Bereich einer zwischen den beiden Umlenkrollen gelegenen Sägeseite des Bandsägeblattes 6 steht das Bandsägeblatt 6 erfindungsgemäß mit seinem Bandrücken bzw. seitlichen Flanken mit einer oder mehreren Dämpfungsrollen 7 in einer reibschlüssigen Verbindung. In der hier dargestellten Ausführungsform sind zwei Dämpfungsrollen 7 und 8 vorgesehen. Die Dämpfungsrolle 7, 8 können an dem Grundrahmen 2 angeordnet sein.

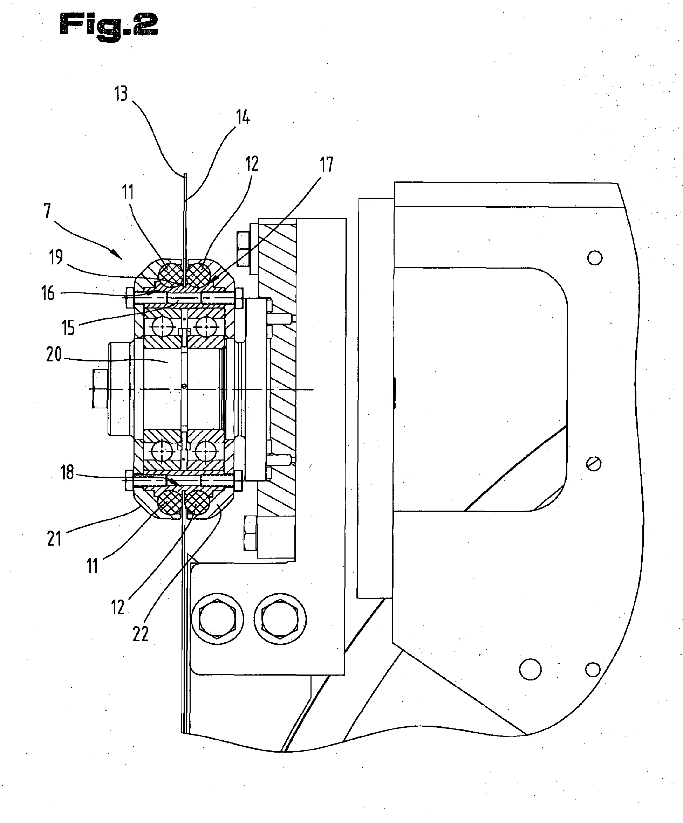

Darüber hinaus weisen die Dämpfungsrollen 7 und 8 je eine Spurführung 9, 10 für den Bandrücken und daran anschließende seitliche Bereiche des Bandsägeblattes 6 auf. Weiters sind ein oder mehrere in Fig. 2 mit den Bezugszeichen 11, 12 versehene Einlageelemente aus einem elastomeren, insbesondere gummielastischen Material vorgesehen. Die Einlageelemente 11, 12 werden zur Erzeugung eines Reibungsschlusses mit dem Bandsägeblatt 6 gegen die Flanken 13, 14 des Bandsägeblattes 6 gepresst. Die Presskraft, mit welcher die Einlageelemente 11 und 12 gegen das Bandsägeblatt 6 bzw. gegen dessen Flanken 13, 14 gepresst werden, kann eine durch Kompression des elastomeren Materials der Einlageelemente 11 und 12 hervorgerufene Rückstellkraft sein.

Zu einer Kompression des elastomeren Materials kann es beispielsweise dadurch kommen, dass wie in Fig. 2 dargestellt, ein Normalabstand zwischen den Einlageelementen 11, 12, welche als O-Ringe ausgebildet sein können, kleiner ist als ein Normalabstand zwischen den Flanken des Bandsägeblattes 6. Anders gesagt ist der freie Abstand zwischen den beiden Einlageelementen 11 und 12 geringer als die Dicke des Bandsägeblattes 6. Durch Einsetzen des Bandsägeblattes 6 in die Dämpfungsrollen 7, 8 werden die Einlageelemente 11 und 12 dann komprimiert, sodass das Bandsägeblatt 6 spielfrei zwischen und von den Einlägeelementen 11, 12 gehalten ist.

Wie aus Fig. 2 weiters ersichtlich ist, kann die Dämpfungsrolle 7 oder 8 einen Inneren Röllenkörper 15 aufweisen, der an seiner Stirnseite zwei umlaufende Einlagenuten 16, 17 für die als O-Ringe ausgebildeten Einlageelemente 11 und 12 aufweist. In der Mitte zwischen den Einlagenuten 16, 17 kann eine ebenfalls um die Stirnseite des Rollenkörpers 15 umlaufende Spurführung 18 für den Bandrücken 19 des Bandsägeblattes 6 vorgesehen sein. Weiters kann der Rollenkörper 15 von einer Öffnung durchsetzt sein, durch welche eine Drehachse 20 der Dämpfungsrolle 7 geführt sein kann. An den seitlichen Flanken des Rollenkörpers 15 können zwei Abdeckschalen 21, 22 befestigt sein, beispielsweise durch Verschrauben mit dem Rollenkörper 15. Die beiden Abdeckschalen 21 und 22 übergreifen in der dargestellten Ausführungsform zumindest abschnittsweise die beiden Einlageelemente 11 und 12, um ein ungewolltes Entfernen der O-Ringe von dem Rollenkörper 15 während des Betriebes zu verhindern.

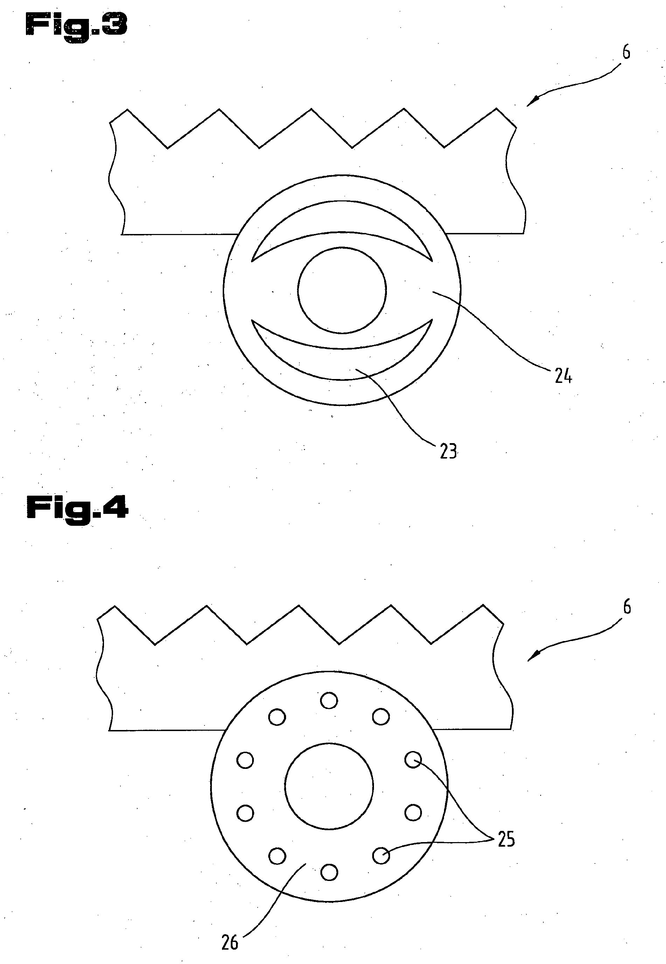

Gemäß einer weiteren in Fig. 3 dargestellten Ausführungsform der Erfindung kann das Einlageelement als Membran 23 ausgebildet sein, welches mittels eines Fluids, insbesondere Luft oder einer Flüssigkeit, beaufschlagbar und gegen die Flanke 13, 14 des Bandsägeblattes 6 pressbar ist. Hierzu kann eine Dämpfungsrolle eine Abdeckschale 24 aufweisen, in welcher von der Membran 23 abgedeckte Öffnungen vorgesehen sind. Durch Beaufschlagung der Membran 23 mit Druck kann diese gegen eine der Flanken 13, 14 des Bandsägeblattes 6 gedrückt werden. So kann beispielsweise ein Gebläse installiert sein, welches bei einem Vorbeidrehen der Membran 23 vor dem Gebläse die Membran 23 mittels des Erzeugten Fluidstroms gegen das Bandsägeblatt 6 presst. In diesem Fall ist es besonders vorteilhaft, wenn an der Abdeckschale 24 zumindest zwei von den Membranen 23 abgedeckte Öffnungen vorgesehen sind, sodass eine permanente Druckausübung auf das Bandsägeblatt 6 und ein durchgehender Reibungsschluss zwischen der Dämpfungsrolle mit dem Bandsägeblatt 6 gewährleistet ist.

Eine weitere alternative, in Fig. 4 dargestellte Ausführungsform kann darin bestehen, das Bandsägeblatt 6 über Absauglöcher 25 in einer Abdeckschale 26 anzusaugen, wobei das Einlageelement in diesem Fall ebenfalls zwischen Bandsägeblatt 6 und Abdeckschale 26 angeordnet ist. Das Einlageelement bzw. die Einlageelemente können bei dieser Ausführungsform beispielsweise als O-Ring, als an den Flanken 13, 14 des Bandsägeblattes 6 anliegende Fortsätze oder als flächiges Einlageelement mit Löchern, welche mit den Absauglöchern 25 der Abdeckschale 26 korrespondieren, ausgebildet sein.

Insbesondere bei den in Fig. 3 und 4 dargestellten Ausführungsformen kann es von Vorteil sein, wenn die Dämpfungsrolle angetrieben ist.

Aus Fig. 1 ist ferner ersichtlich, dass die zumindest eine Dämpfungsrolle 8 um eine normal zu einer Schnitt- bzw. Sägeebene verlaufende Achse c verschwenkbar angeordnet ist und ein Sicherheitsschalter 27 zum Abschalten der Bandsägevorrichtung 1 vorgesehen ist, der durch ein Verschwenken der Dämpfungsrolle 8 um eine vorgebbare Auslenkung um die Achse c betätigt ist.

Die Dämpfungsrolle 8 kann auf einem mit einer Federkraft belasteten Arm 28 drehbar gelagert sein. Zur Erzeugung der Federkraft auf den Arm kann beispielsweise eine pneumatische, hydropneumatische oder Schraubenfeder vorgesehen sein. Der Arm 28 wiederum kann um die normal zu der Schnittebene verlaufende Achse c drehbar angeordnet sein. Unter dem Begriff Schnittebene wird in dem vorliegenden Zusammenhang die Ebene verstanden, in welcher das Bandsägeblatt 6 liegt und in der eine Trennung des zu zersägenden Werkstückes erfolgt. Die für den Sägevorgang erforderliche Vorschubkraft nimmt mit abnehmender Schärfe der Schneidezähne der Bandsägeblattes 6 zu. Überschreitet die erforderliche Vorschubkraft einen bestimmten Wert, so kann das Bandsägeblatt 6 aus seiner Sollposition gedrückt werden und mit seinen Schneidezähnen mit einem Maschinenteil der Bandsägevorrichtung 1 in Berührung kommen, beispielsweise mit einem der Umlenkräder 3, 4. Dies kann zu einer Beschädigung der Bandschneidevorrichtung zur Folge haben. Die verschwenkbar angeordnete Dämpfungsrolle 8 kann bei Überschreiten eines vorgebbaren Wert für die Vorschubkraft soweit zurück gedrängt werden, dass der Sicherheitsschalter 27 von der Dämpfungsrolle 8 bzw. dem Arm 28 oder einem mit der Dämpfungsrolle 8 oder dem Arm 28 verbundenen weiteren Bauteil betätigt wird.

Anstelle der Feder kann auch eine mit dem Arm verbundener Kraftsensor, beispielsweise eine Kraftmessdose oder Wägezelle, vorgesehen sein, um einen Verschleiß der Schneide des Bandsägeblattes zu detektierten. Ein von dem Kraftsensor erzeugtes Signal kann an eine Auswerteeinheit, weitergeleitet werden welche einen Sicherheitsschalter betätigt und eine Abschaltung der Bandsägevorrichtung bei Überschreiten eines vorgegebenen Grenzwertes bewirkt. Die Auswerteeinheit kann beispielsweise als Mikroprozessor, Signalprozessor oder als elektronische Schaltung, insbesondere als integrierter Schaltkreis, realisiert sein. Auch kann es vorgesehen sein, dass der Sensor so ausgebildet ist, dass nur bei Überschreiten eines vorgebbaren Wertes der aufgenommenen Kraft ein Signal generiert wird. Dieses Signal kann beispielsweise direkt an den Sicherheitsschalter weitergeleitet werden und den Schalter in einen Schaltzustand bringen, welcher eine Abschaltung der Bandsägevorrichtung 1 zur Folge hat.

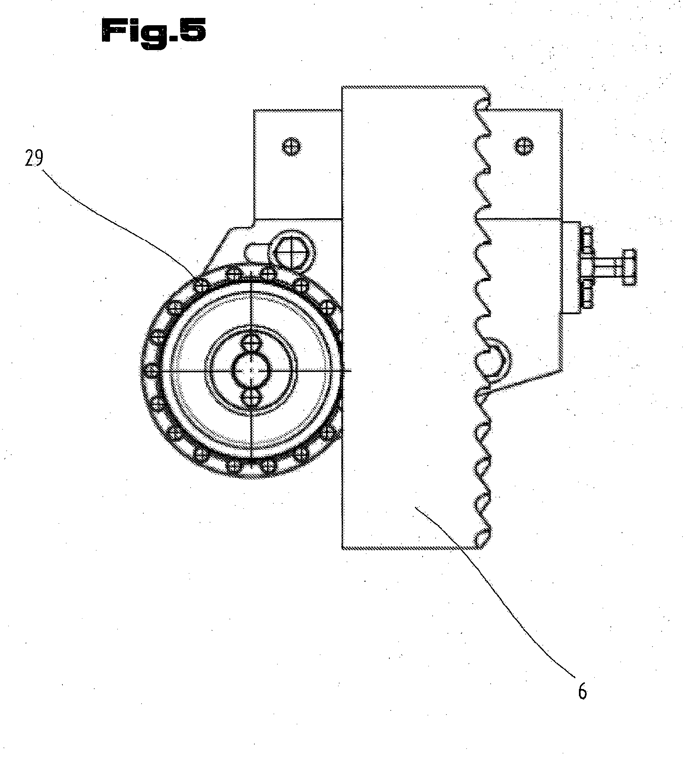

Wie aus Fig. 5 ersichtlich ist, können auf mindestens einer Seite der Dämpfungsrolle auch Magnete 29 angeordnet sein. Die Magnete 29 müssen sich hierbei nicht an der Oberfläche einer inneren Flanke der Dämpfungsrolle befinden. Sie können auch zur Gänze unterhalb der Oberfläche, d.h. innerhalb der Dämpfungsrolle angeordnet sein. Durch die Magnete 29 wird eine im Wesentlichen quer zu Bewegungsrichtung des Bandsägeblattes 6 verlaufende Kraft auf das Bandsägeblatt 6 ausgeübt, durch die das Bandsägeblatt 6 gegen eine Flanke der Dämpfungsrolle gezogen bzw. gepresst wird.

Obwohl hier mehrere Magnete 29 dargestellt sind, ist es auch möglich, dass nur ein einziger ringförmig um eine Achse der Dämpfungsrolle angeordneter Magnet 29 verwendet wird. Bei den Magneten 29 kann es sich um Permanentmagnete aber auch um Elektromagnete handeln. Permanentmagnete haben den Vorteil, dass sie sehr wartungsfrei sind und deren Einbau nur einen geringen baulichen Aufwand erfordern. Elektromagnete, wie beispielsweise stromdurchflossene Spulen, haben den Vorteil, dass mit ihnen das erzeugte Magnetfeld verändert werden kann, sodass eine Steuerung des auf das Bandsägeblatt 6 wirkenden Magnetfeldes möglich ist und daher die Stärke der Dämpfung des Bandsägeblattes 6 auch im laufenden Betrieb eingestellt werden kann.

Der Ordnung halber sei abschließend auch darauf hingewiesen, dass zum besseren Verständnis des Aufbaus der erfindungsgemäßen Bandsägevorrichtung diese bzw. deren Bestandteile teilweise unmaßstäblich und/oder vergrößert und/oder verkleinert dargestellt wurden.

### Bezugszeichenaufstellung

- 1: Bandsägevorrichtung
- 2: Grundrahinen
- 3: Umlenkrad
- 4: Umlenkrad
- 5: Antriebsmittel

- 6: Bandsägeblatt
- 7: Dämpfungsrolle
- 8: Dämpfungsrolle
- 9: Spurführung
- 10: Spurführung

- 11: Einlageelement
- 12: Einlageelement
- 13: Flanke
- 14: Flanke
- 15: Rollenkörper

- 16: Einlagenut
- 17: Einlagenut
- 18: Spurführung
- 19: Bandrücken
- 20: Drehachse

- 21: Abdeckschale
- 22: Abdeckschale
- 23: Membran
- 24: Abdeckschale
- 25: Absauglöcher

- 26: Abdeckschale
- 27: Sicherheitsschalter
- 28: Arm
- 29: Magnet

## Patentansprüche

1. Bandsägevorrichtung (1) umfassend einen Grundrahmen (2), zumindest zwei voneinander distanziert angeordnete Umlenkräder (3, 4), ein Antriebsmittel (5), welches mit zumindest einem der Umlenkräder (3,4) in Antriebsverbindung steht und ein um die Umlenkräder (3, 4) endlos umlaufendes Bandsägeblatt (6), wobei das Bandsägeblatt (6) im Bereich einer zwischen den beiden Umlenkrollen gelegenen Sägeseite mit zumindest einer Dämpfungsrolle (7, 8) in einer reibschlüssigen Verbindung steht und wobei die Dämpfungsrolle (7, 8) eine Spurführung (9, 10) für Bandrücken und daran anschließende seitliche Bereiche des Bandsägeblattes (6) aufweist, **dadurch gekennzeichnet, dass** die Dämpfungsrolle (7, 8) zumindest ein Einlageelement (11, 12) aus einem elastomeren, insbesondere gummielastischen, Material aufweist, welches gegen eine Flanke des Bandsägeblattes (6) gepresst ist.

2. Bandsägevorrichtung nach Anspruch 1, **dadurch gekennzeichnet, dass** das zumindest eine Einlageelement (11, 12) durch eine von dem elastomeren Material hervorgerufene Rückstellkraft gegen die Flanke des Bandsägeblattes (6) gepresst ist.

3. Bandsägevorrichtung nach Anspruch 2, **dadurch gekennzeichnet, dass** das zumindest eine Einlageelement als O-Ring ausgebildet ist.

4. Bandsägevorrichtung nach Anspruch 2 oder 3, **dadurch gekennzeichnet, dass** die Dämpfungsrolle (7, 8) zumindest zwei Einlageelemente (11,12) aufweist, welche an einander gegenüberliegenden Flanken (13,14) des Bandsägeblattes (6) anliegen, und ein Normalabstand zwischen den Einlageelementen (11, 12) kleiner ist als ein Normalabstand zwischen den Flanken des Bandsägeblattes (6), wobei das Bandsägeblatt (6) spielfrei zwischen und von den Einlageelementen (11,12) gehalten ist.

5. Bandsägevorrichtung nach einem der Ansprüche 2 oder 4, **dadurch gekennzeichnet, dass** das zumindest eine Einlageelement als Membran (23) ausgebildet ist, welche mittels eines Fluids, insbesondere Luft oder einer Flüssigkeit, beaufschlagbar und gegen die Flanke (13, 14) des Bandsägeblattes (6), pressbar ist.

6. Bandsägevorrichtung nach einem der Ansprüche 1 bis 5, **dadurch gekennzeichnet, dass** die zumindest eine Dämpfungsrolle (8) um eine normal zu einer Schnittebene verlaufende Achse (c) verschwenkbar angeordnet ist und ein Sicherheitsschalter (27) zum Abschalten der Band- I. sägevomchtung (1) vorgesehen ist, der durch ein Verschwenken der Dämpfungsrolle (8) um eine vorgebbare Auslenkung betätigt ist und/oder dass ein mit einem Arm (28) verbundener Kraftaufnehmer, beispielsweise eine Wägezelle oder Kraftmessdose, vorgesehen ist, um einen Verschleiß des Bandsägeblatte zu detektieren.

7. Bandsägevorrichtung nach Anspruch 6, **dadurch gekennzeichnet, dass** die Dämpfungsrolle (8) auf zumindest einem mit einer Federkraft belasteten Arm (28) drehbar gelagert ist, wobei der Arm (28) um die normal zu der Schnittebene verlaufende Achse (c) drehbar angeordnet ist.

8. Bandsägevorrichtung nach einem der Ansprüche 1 bis 7, **dadurch gekennzeichnet, dass** die zumindest eine Dämpfungsrolle (7, 8) an dem Grundrahmen (2) angeordnet ist.

9. Bandsägevorrichtung nach einem der Ansprüche 1 bis 8, **dadurch gekennzeichnet, dass** die zumindest eine Dämpfungsrolle (7, 8) angetrieben ist.

10. Bandsägevoirichtung (1) umfassend einen Grundrahmen (2), zumindest zwei voneinander distanziert angeordnete Umlenkräder (3, 4), ein Antriebsmittel (5), welches mit zumindest einem der Umlenkräder (3, 4) in Antriebsverbindung steht und ein um die Umlenkräder (3, 4) endlos umlaufendes Bandsägeblatt (6), wobei das Bandsägeblatt (6) im Bereich einer zwischen den beiden Umlenkrollen gelegenen Sägeseite mit zumindest einer Dämpfungsrolle (7, 8) in einer reibschlüssigen Verbindung steht, wobei die Dämpfungsrolle (7, 8) eine Spurführung (9, 10) für den Bandrücken und daran anschließende seitliche Bereiche des Bandsägeblattes (6) aufweist **dadurch gekennzeichnet, dass** wobei die zumindest eine Dämpfungsrolle (7, 8) zumindest einen Magnet (29) aufweist und der Magnet (29) an einer inneren Flanke der Dämpfungsrolle angeordnet ist.

## Claims

1. A band saw device (1) comprising a base frame (2), at least two deflection wheels (3, 4) which are arranged at a distance from each other, a drive means (5), which is in a driving engagement with at least one of the deflection wheels (3, 4), and a band saw blade (6) continuously circulating the deflection wheels (3,4), wherein the band saw blade (6) is frictionally engaged with at least one damping roller (7, 8) in the region of one side of the saw arranged between both deflection rollers, and wherein the damping roller (7, 8) has a track guide (9, 10) for the back of the band and lateral regions of the band saw blade (6) adjoining thereto, **characterized in that** the damping roller (7, 8) has at least one insert element (11, 12) of an elastomer, in particular rubber-elastic material, which is pressed against a flank of the band saw blade (6).

2. The band saw device according to claim 1, **characterized in that** the at least one insert element (11, 12) is pressed against the flank of the band saw blade (6) by a restoring force brought about by the elastomer material.

3. The band saw device according to claim 2, **characterized in that** the at least one insert element is constructed as an O-ring.

4. The band saw device according to claim 2 or 3, **characterized in that** the damping roller (7, 8) has at least two insert elements (11, 12), which lie on flanks (13, 14), lying opposite one another, of the band saw blade (6), and a normal distance between the insert elements (11, 12) is smaller than a normal distance between the flanks of the band saw blade (6), wherein the band saw blade (6) is held in a manner free from play between and by the insert elements (11, 12).

5. The band saw device according to one of claims 2 or 4, **characterized in that** the at least one insert element is constructed as a membrane (23), which is able to be acted upon by means of a fluid, in particular air or a liquid, and is able to be pressed against the flank (13, 14) of the band saw blade (6).

6. The band saw device according to one of claims 1 to 5, **characterized in that** the at least one damping roller (8) is pivotably arranged about an axis (c) running normally to a section plane, and a safety switch (27) is provided for switching off the band saw device (1), which switch is actuated by a pivoting of the damping roller (8) about a predetermined deflection and/or that a force sensor, for example a weighing cell or load cell, connected with an arm (28), is provided in order to detect a wear of the band saw blade.

7. The band saw device according to claim 6, **characterized in that** the damping roller (8) is mounted rotatably on at least one arm (28) loaded with an elastic force, wherein the arm (28) is arranged rotatably about the axis (c) running normally to the section plane.

8. The band saw device according to one of claims 1 to 7, **characterized in that** the at least one damping roller (7, 8) is arranged on the base frame (2).

9. The band saw device according to one of claims 1 to 8, **characterized in that** the at least one damping roller (7, 8) is driven.

10. A band saw device (1) comprising a base frame (2), at least two deflection wheels (3, 4) which are arranged at a distance from each other, a drive means (5), which is in a driving engagement with at least one of the deflection wheels (3, 4), and a band saw blade (6) continuously circulating the deflection wheels (3,4), wherein the band saw blade (6) is frictionally engaged with at least one damping roller (7, 8) in the region of one side of the saw arranged between both deflection rollers, wherein the damping roller (7, 8) has a track guide (9, 10) for the back of the band and lateral regions of the band saw blade (6) adjoining thereto, **characterized in that** the at least one damping roller (7, 8) has at least one magnet (29) and the magnet (29) is arranged on an inner flank of the damping roller.

## Revendications

1. Dispositif de scie à ruban (1) comprenant un châssis (2), au moins deux roues de renvoi (3, 4) espacées l'une de l'autre, un moyen d'entraînement (5) qui est en liaison d'entraînement avec au moins une des roues de renvoi (3, 4) et un ruban de scie sans fin (6) passant sur les roues de renvoi (3, 4), le ruban de scie (6) étant en contact de friction, sur un côté de la scie située entre les deux roues de renvoi, avec au moins un galet amortisseur (7, 8), et le galet amortisseur (7, 8) ayant un guidage de voie (9, 10) pour le dos du ruban et des zones adjacentes latérales du ruban de scie (6),
**caractérisé en ce que** le galet amortisseur (7, 8) comprend au moins un élément insert (11, 12) en un matériau élastomère, notamment élastique comme du caoutchouc, qui est en appui sur un flanc du ruban de scie (6).

2. Dispositif de scie à ruban selon la revendication 1, **caractérisé en ce que** le (ou les) élément(s) insert (11, 12) est/sont en appui sur le flanc du ruban de scie (6) sous la contrainte d'une force de rappel engendrée par le matériau élastomère.

3. Dispositif de scie à ruban selon la revendication 2, **caractérisé en ce que** le (ou les) élément(s) insert est/sont formé(s) comme anneau toroïdal.

4. Dispositif de scie à ruban selon la revendication 2 ou 3, **caractérisé en ce que** le galet amortisseur (7, 8) comprend au moins deux éléments insert (11, 12) qui sont en appui sur des flancs opposés (13, 14) du ruban de scie (6), et **en ce qu'**une distance normale entre les éléments insert (11, 12) est inférieure à une distance normale entre les flancs du ruban de scie (6), le ruban de scie (6) étant maintenu sans jeu entre et par les éléments insert (11, 12).

5. Dispositif de scie à ruban selon l'une quelconque des revendications 2 ou 4, **caractérisé en ce que** l'élément insert (ou les éléments insert) est/sont formé(s) comme membrane (23) qui peut être mise sous contrainte d'un fluide, notamment de l'air ou d'un liquide, et pressée sur le flanc (13, 14) du ruban de scie (6).

6. Dispositif de scie à ruban selon l'une quelconque des revendications 1 à 5, **caractérisé en ce que** le (ou les) galet(s) amortisseur (8) est/sont disposé(s) pivotant(s) autour d'un axe (c) perpendiculaire à un plan de coupe et **en ce qu'**un interrupteur de sécurité (27) pour arrêter le dispositif de scie à ruban (1) est prévu qui est actionné par un pivotement du galet amortisseur (8) d'une déviation pouvant être prédéterminée et/ou qu'un capteur d'effort, par exemple une cellule de pesage ou un dynamomètre, attaché à un bras (28) est prévu pour détecter une usure du ruban de scie.

7. Dispositif de scie à ruban selon la revendication 6, **caractérisé en ce que** le galet amortisseur (8) est monté tournant sur au moins un bras (28) précontraint par un effort de ressort, le bras (28) étant monté tournant autour de l'axe (c) perpendiculaire au plan de coupe.

8. Dispositif de scie à ruban selon l'une quelconque des revendications 1 à 7, **caractérisé en ce que** le (ou les) galet(s) amortisseur (7, 8) est/sont disposé(s) sur le châssis (2).

9. Dispositif de scie à ruban selon l'une quelconque des revendications 1 à 8, **caractérisé en ce que** le (ou les) galet(s) amortisseur (7, 8) est/sont entraîné(s).

10. Dispositif de scie à ruban (1) comprenant un châssis (2), au moins deux roues de renvoi (3, 4) espacées l'une de l'autre, un moyen d'entraînement (5) qui est en liaison d'entraînement avec au moins une des roues de renvoi (3, 4) et un ruban de scie sans fin (6) passant sur les roues de renvoi (3, 4), le ruban de scie (6) étant en contact de friction, sur un côté de la scie située entre les deux roues de renvoi, avec au moins un galet amortisseur (7, 8), et le galet amortisseur (7, 8) ayant un guidage de voie (9, 10) pour le dos du ruban et des zones adjacentes latérales du ruban de scie (6),
**caractérisé en ce que** le galet amortisseur (7, 8) comprend au moins un aimant (29) et **en ce que** l'aimant (29) est disposé sur un flanc intérieur du galet amortisseur.
